# EUROPÄISCHE PATENTANMELDUNG

(11) **EP 0 753 630 A1**
(43) Veröffentlichungstag der Anmeldung: **15.01.1997**
(21) Anmeldenummer: 96109721.9
(22) Anmeldetag: 18.06.1996
(51) Int. Cl.: E03B 3/02

(54) **Regenwasserfänger**

(30) Priorität: 08.07.1995 DE 29511104 U
(71) Anmelder: Dipl.-Ing. Özpolat GmbH, 64385 Reichelsheim (DE)
(72) Erfinder: Özpolat, Ilyas, Dipl.-Ing., 64385 Reichelsheim (DE)
(74) Vertreter: Katscher, Helmut, Dipl.-Ing.

(57) **Zusammenfassung**

Ein Regenwasserfänger (1) für ein Regenfallrohr (2,3) weist ein im wesentlichen rohrförmiges Gehäuse (4) auf, das am oberen und unteren Ende zur Verbindung mit dem Regenfallrohr (2,3) ausgebildet ist. Am inneren Gehäuseumfang ist eine nach innen vorspringenden Fangtasche (8) vorgesehen, die einen im Abstand zur Gehäusewand (5) angeordneten, nach oben ragenden Überfallkragen (9) aufweist. Eine Ableitöffnung (10) führt durch die Gehäusewand (5) nach außen. Eine Fangrinne (14) mündet von einer mit Abstand innerhalb des Gehäuses (4) liegenden Stelle mit Gefälle in die Fangtasche (8). Angenähert in der Mittelachse (12) des Gehäuses (4) ist oberhalb der Fangtasche (8) ein nach oben offener Fangnapf (13) angeordnet, aus dem die Fangrinne (14) mit Gefälle im Bereich der Ableitöffnung (10) in die Fangtasche (8) mündet in die Fangtasche (8) mündet.

## Beschreibung

Die Erfindung betrifft einen Regenwasserfänger für ein Regenfallrohr, mit einem im wesentlichen rohrförmigen Gehäuse, das am oberen und unteren Ende zur Verbindung mit dem Regenfallrohr ausgebildet ist, mit einer am inneren Gehäuseumfang nach innen vorspringenden Fangtasche, die einen im Abstand zur Gehäusewand angeordneten, nach oben ragenden Überfallkragen aufweist und aus der eine Ableitöffnung durch die Gehäusewand nach außen führt.

Regenwasserfänger dienen dazu, aus einem Regenfallrohr Regenwasser abzuleiten und einem Sammelbehälter zuzuführen, damit das Regenwasser als Brauchwasser benutzt werden kann, insbesondere zur Gartenbewässerung.

Da die Aufnahmekapazitäten solcher Regenwasserbehälter begrenzt sind, muß sichergestellt sein, daß beim Anfall größerer Regenwassermengen das überschüssige Regenwasser unbehindert durch das Regenfallrohr abfließen kann. Damit geringe Regenwassermengen vollständig oder überwiegend dem Sammelbehälter zugeführt werden können, ist die das Regenwasser für Sammelzwecke auffangende Fangtasche bei einem Regenwasserfänger der eingangs genannten Gattung (EP 0 151 921 B1) nur am inneren Gehäuseumfang angeordnet, weil davon ausgegangen werden kann, daß bei geringem Regenwasseranfall dieses Regenwasser ausschließlich an der Gehäuseinnenwand herabläuft.

Bei dem bekannten Regenwasserfänger ist der Boden der Fangtasche zur Ableitöffnung hin geneigt, so daß auch aller bei geringer Regenwassermenge eingetragener Schmutz zur Ableitöffnung hin transportiert wird und diese verstopfen kann.

Bereits bei leichter erhöhter Regenwassermenge fließt in den meisten Regenfallrohren das Regenwasser nicht mehr ausschließlich an der Gehäuseinnenwand herab. Vielmehr kommt es bei erhöhter Regenwassermenge schon sehr bald zu einer gewissen Strahlkontraktion im mittleren Bereich des Regenfallrohrs.

Aufgabe der Erfindung ist es, einen Regenwasserfänger der eingangs genannten Gattung so auszubilden, daß er auch bei erhöhter, jedoch noch nicht übermäßiger Regenwassermenge eine erhöhte Wassermenge zu Sammelzwecken durch die Ableitöffnung nach außen leitet.

Diese Aufgabe wird erfindungsgemäß dadurch gelöst, daß eine Fangrinne von einer mit Abstand innerhalb des Gehäuses liegenden Stelle mit Gefälle in die Fangtasche mündet.

Diese Fangrinne ragt in den Innenraum des Gehäuses und erfaßt damit auch solche Anteile des im Regenfallrohr herabströmenden Regenwassers, das nicht nur an der Gehäuseinnenwand entlangläuft. Zusätzlich zu der Wirkung der an der Gehäuseinnenwand angebrachten Fangtasche, die bereits geringste, an der Gehäuseinnenwand herablaufende Regenwassermengen erfaßt, steigt bei dem erfindungsgemäßen Regenwasserfänger die zu Sammelzwecken abgeführte Regenwassermenge noch an, wenn sich der Regenwasseranfall so erhöht, daß ein mehr oder minder großer Anteil des Wassers im inneren Bereich des Gehäuses herabströmt bzw. wenn es zu einer sogenannten Strahlkontraktion im Bereich der Mittelachse des Gehäuses kommt.

Vorzugsweise ist angenähert in der Mittelachse des Gehäuses oberhalb der Fangtasche ein nach oben offener Fangnapf angeordnet, aus dem die Fangrinne mit Gefälle in die Fangtasche mündet. Dieser Fangnapf ist insbesondere dazu vorgesehen, die im Bereich der Mittelachse verlaufende Wasserströmung zu erfassen.

Als besonders vorteilhaft hat es sich erwiesen, die Fangrinne im Bereich der Ableitöffnung in die Fangtasche münden zu lassen. Dadurch verläuft die Wasserströmung aus der Fangrinne weitgehend geradlinig unmittelbar in die Ableitöffnung. Dies führt zu einer guten Reinigungswirkung, weil die Ablagerung von Schmutz im Bereich der Ableitöffnung verhindert bzw. beseitigt wird.

Die Anordnung des inneren Endes der Fangrinne und insbesondere des Fangnapfes mit Abstand oberhalb der Fangtasche führt dazu, daß die Fangrinne bzw. die Fangtasche den lichten Gehäusequerschnitt nicht in dem Bereich noch stärker einschränken, in dem er bereits durch die Fangtasche eingeengt ist. Vielmehr bleibt der Durchströmquerschnitt innerhalb des Überfallkragens weitestgehend unbehindert. In dem Bereich, in den die Fangrinne und ggf. der Fangnapf ragen, ist der lichte Querschnitt des Gehäuses noch nicht durch die Fangtasche beeinträchtigt.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:
Fig. 1 einen Regenwasserfänger in einem senkrechten Schnitt,
Fig. 2 den Fangeinsatz des Regenwasserfängers nach Fig. 1 und
Fig. 3 eine Draufsicht auf den Fangeinsatz nach Fig. 2.

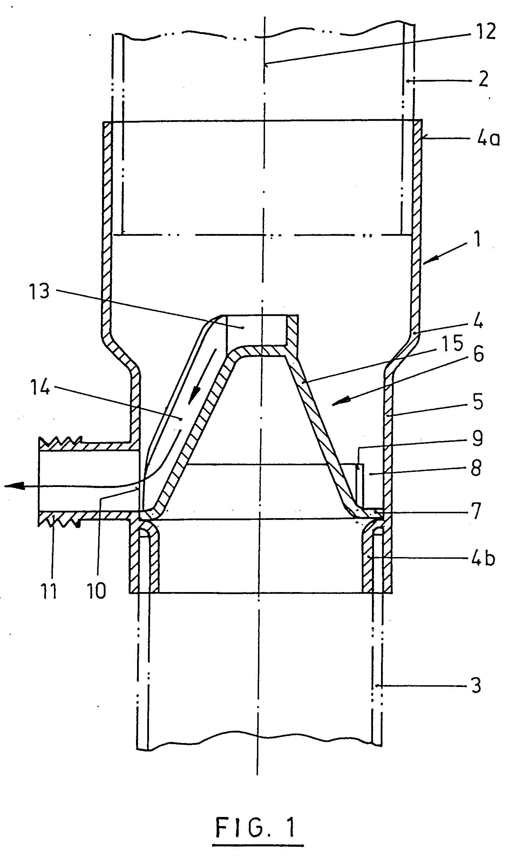

Der in Fig. 1 gezeigte Regenwasserfänger 1 ist zum Anschluß an ein in Fig. 1 mit strichpunktierten Linien nur angedeutetes Regenfallrohr 2, 3 bestimmt. Ein im wesentlichen rohrförmiges Gehäuse 4 des Regenwasserfängers 1 ist an seinem oberen Ende als Muffe 4a ausgebildet, die über das untere Ende des oberen Regenfallrohrs 2 greift. Am unteren Ende weist das Gehäuse 4 eine doppelwandige Steckmuffe 4b auf, die über das obere Ende des unteren Regenfallrohrs 3 gesteckt wird.

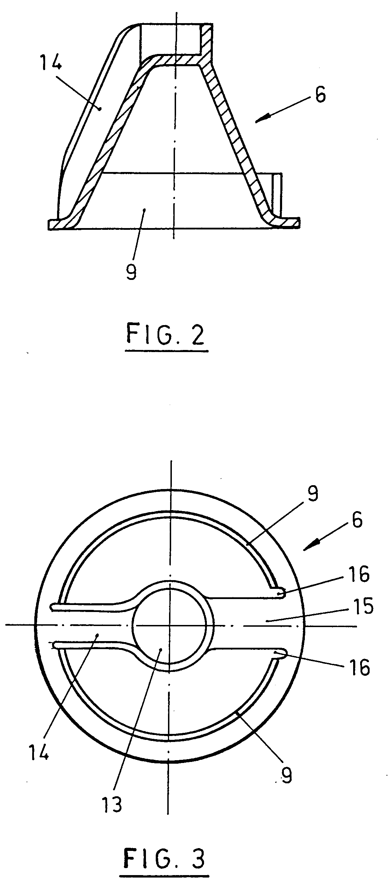

Die von der Gehäusewand 5 des Gehäuses 4 nach innen vorspringende Steckmuffe 4b bildet ein Auflager für einen Fangeinsatz 6, der als Einzelteil in den Fig. 2 und 3 dargestellt ist. Ein horizontaler Flansch am Umfang des Fangeinsatzes 6 bildet einen Boden 7 für eine am inneren Gehäuseumfang verlaufenden Fangtasche 8, die nach innen durch einen Überfallkragen 9 begrenzt wird, der vom Boden 7 im Abstand zur Gehäusewand 5 nach oben ragt.

Aus der horizontal angeordneten Fangtasche 8 führt eine Ableitöffnung 10 durch die Gehäusewand 5 nach außen zu einem Schraubstutzen 11, an den eine Ablaufleitung für das aufgefangene Regenwasser angeschlossen werden kann.

Angenähert in der Mittelachse 12 des Gehäuses 4 ist im Abstand oberhalb der Fangtasche 8 ein nach oben offener Fangnapf 13 angeordnet, der das innere Ende einer Fangrinne 14 bildet, die vom Fangnapf 13 mit starkem Gefälle in die Fangtasche 8 an der Stelle mündet, an der sich die Ableitöffnung 10 befindet. Das in das Gehäuse 4 ragende Ende der Fangrinne 14, das beim dargestellten Ausführungsbeispiel durch den Fangnapf 13 gebildet wird, ist über einen Stützsteg 15 mit der Fangtasche 8 verbunden. Bei dem dargestellten Ausführungsbeispiel erstreckt sich der Stützsteg 15 nach der der Fangrinne 14 gegenüberliegenden Stelle.

Wie man aus den Fig. 1 und 2 erkennt, liegt das in das Gehäuse 4 ragende Ende der Fangrinne 14 bzw. der Fangnapf 13 in einer mindestens dem halben Gehäusedurchmesser entsprechenden Höhe über der Fangtasche 8.

Aus der Grundrißdarstellung des Fangeinsatzes 6 in Fig. 3 ist zu erkennen, daß der Überfallkragen 9, der im Mündungsbereich der Fangrinne 14 unterbrochen ist, auch an der gegenüberliegenden Umfangsstelle unterbrochen ist und jeweils im Abstand vor dem Stützsteg 15 endet. Dadurch weist der Überfallkragen 9 an der der Ableitöffnung 10 gegenüberliegenden Umfangsstelle eine Ableitöffnung 16 auf, durch die das Wasser unmittelbar aus der Fangtasche 8 in das Regenfallrohr 3 ablaufen kann. Dadurch erfolgt auch bei geringer anfallender Regenwassermenge eine ausreichende Selbstreinigung der Fangtasche 8.

## Patentansprüche

1. Regenwasserfänger (1) für ein Regenfallrohr 2,3), mit einem im wesentlichen rohrförmigen Gehäuse (4), das am oberen und unteren Ende zur Verbindung mit dem Regenfallrohr (2,3) ausgebildet ist, mit einer am inneren Gehäuseumfang nach innen vorspringenden Fangtasche (8), die einen im Abstand zur Gehäusewand (5) angeordneten, nach oben ragenden Überfallkragen (9) aufweist und aus der eine Ableitöffnung (10) durch die Gehäusewand (5) nach außen führt, dadurch gekennzeichnet, daß eine Fangrinne (14) von einer mit Abstand innerhalb des Gehäuses (4) liegenden Stelle mit Gefälle in die Fangtasche (8) mündet.

2. Regenwasserfänger nach Anspruch 1, dadurch gekennzeichnet, daß angenähert in der Mittelachse (12) des Gehäuses (4) oberhalb der Fangtasche (8) ein nach oben offener Fangnapf (13) angeordnet ist, aus dem die Fangrinne (14) mit Gefälle in die Fangtasche (8) mündet.

3. Regenwasserfänger nach Anspruch 1, dadurch gekennzeichnet, daß die Fangrinne (14) im Bereich der Ableitöffnung (10) in die Fangtasche (8) mündet.

4. Regenwasserfänger nach Anspruch 1, dadurch gekennzeichnet, daß der Überfallkragen (9) an einer der Ableitöffnung (10) gegenüberliegenden Umfangsstelle eine Ableitöffnung (16) aufweist.

5. Regenwasserfänger nach Anspruch 1 oder 2, dadurch gekennzeichnet, daß das in das Gehäuse (4) ragende Ende der Fangrinne (14) bzw. der Fangnapf (13) über mindestens einen Stützsteg (15) mit der Fangtasche (8) verbunden ist.

6. Regenwasserfänger nach Anspruch 1 oder 2, dadurch gekennzeichnet, daß das in das Gehäuse (4) ragende Ende der Fangrinne (14) bzw. der Fangnapf (13) in einer mindestens dem halben Gehäusedurchmesser entsprechenden Höhe über der Fangtasche (8) liegt.
